# EUROPEAN PATENT APPLICATION

(11) **EP 3 685 718 A1**
(43) Date of publication of application: **29.07.2020**
(21) Application number: 19153417.1
(22) Date of filing: 24.01.2019
(51) Int. Cl.: A47J 43/046

(54) **KITCHEN WORKTOP-INTEGRATED FOOD BLENDING AND MIXING SYSTEM**

(71) Applicant: Millo Appliances, UAB, 06269 Vilnius (LT)
(72) Inventor: Trakselis, Ruslanas, 08344 Vilnius (LT)
(74) Representative: Klimaitiene, Otilija

(57) **Abstract**

This invention relates to a system (1) for processing food products and drinkables, which integrates the food blending, mixing or crushing type devices, having a magnetic coupling (5, 7) between the driving and driven rotation components, into a general-purpose kitchen worktop (2), cooktop or counter-top wherein the driving component (9) of the magnetic coupling is integrated underneath the upper surface of the worktop (2). Furthermore, an induction heating element (8) is situated in the same area of the worktop. This integration provides seamless and combined operation of different kitchen devices and tools on the worktop (2), easy maintenance, and simultaneous and combined mixing and heating of the food to be processed. Furthermore, a rotation torque multiplier gear (74) is involved with the second component of the magnetic coupling, to make the system applicable for a variety of different food processing devices and tools employing rotation.

## Description

### FIELD OF INVENTION

This invention relates to food and beverage processing on a kitchen worktop with an integrated blender, mixer, crusher, etc. More precisely, this is an integrated food processing system, comprising a general-purpose kitchen worktop and employing food processing devices controlled by alternating magnetic flux and particularly having a non-contact magnetic coupling.

### BACKGROUND OF INVENTION

Mixing and blending devices which are employed to process food and beverages are commonly used in everyday household applications. Often these devices comprise a main container and a lid, which covers the open ending of the main container to maintain the contents to be processed hermetically sealed inside the container. The aforementioned container is also often used to contain the processed food or beverages during further consumption. Food is processed by use of a blade assembly, which are commonly affixed on top of a rotation shaft. A motor, mechanically attached to the rotation axis, rotates the shaft, consequently rotating the blades.

Most frequently, in-home kitchen appliance, blades of mixer or blender device are rotated by using a mechanical coupling. Commonly, these blades are mounted into a detachable glass or plastic container of a mixer (or a blender) in such a manner, that it could be rotated at a sufficient frequency and provide enough torque in order to process food or beverages into a uniform consistency. One of the patents describing such appliance is "Kitchen appliance electrically driven motor unit" by GB839575A published in 1960-06-29. A kitchen appliance driving unit has the motor suspended from a plate which can be arranged flush with a table or the equivalent thereof, the plate forming the top of a casing recessed into the table and enclosing the unit. As shown, the shaft of the driven device can engage either the upper end of the motor shaft or be driven through a clutch from gears and meshing with teeth on the motor shaft. The plate which closes the housing has an opening to enable the driven device to be coupled to the motor and another to receive the handle of a rotary switch which enables the motor speed to be varied.

It is also known that in food processing devices a magnetic flux can be applied in order to eliminate mechanical couplings from such constructions. It enables the user to station the container of a blender or a mixer into a working stance more easily. Also, containers comprising no mechanical couplings, are commonly easier to clean and of smaller dimensions. However, the main drawback of such food processing devices is that the container, in which the food is being processed, is mechanically affixed to the housing by employing various holders and mechanical couplings.

A food processing device, utilizing magnetic field for rotation of its parts, is described in the USA patent no. US6210033, published on 2002-06-27. This device employs magnetic induction drive for a rotatable driven member in a sealed housing, in particular, a shaft-mounted blade in a blender cup, which uses a comparatively thin circular plate of a magnetizable material with circumferentially arrayed poles secured within the housing to the shaft. A brushless d.c. motor in a base separate from the housing has a rotor formed as an array of pie-shaped permanent magnet regions that interact with an electronically controlled, rotating electromagnetic field produced by a ring of stator coils. A second similar permanent magnet is coupled to rotate coaxially and in unison with the rotor, with poles of opposite polarity aligned and adjacent one another. A steel disc is sandwiched between and bonded to the rotor and the second permanent magnet. The magnetic field (lines of flux) of the second magnet extends axially away from the rotor to induce magnetic poles of opposite polarity in the drive plate. This second magnet-to-plate magnetic coupling operates across a closely-spaced gap that includes the bottom wall of the blender cup base, the upper wall of the housing, and air gaps between these walls, the plate and the second magnet.

Another food and beverage processing device, employing a magnetic field for the rotation of its parts is described in the Australian patent no. AU2015201257, published on 2015-11-12. It describes a low-profile motor for portable appliances, where a blending appliance includes a housing having a jar receiving portion defined between an upper housing and a base portion laterally extending from the housing. A blender jar is adapted to be laterally received within the jar receiving portion and includes a jar base and a receptacle portion. A stator is disposed in the base portion of the housing and is adapted to create an electromagnetic field to drive a rotatable magnetic coupler disposed in the jar base as part of a magnetic coupling system. The rotatable magnetic coupler is coupled to a drive shaft that is further coupled to a blade assembly disposed within the receptacle portion of the blender jar. The blade assembly is configured to process ingredients within the receptacle portion of the blender jar as coupled to the rotatable magnetic coupler.

Yet another food processing device, utilizing magnetic field for rotation of its parts, is described in a Chinese patent no. CN201987367, published on 2011-09-28. The utility model discloses a blender and aims at providing the blender which has a magnetic transmission mechanism capable of approaching a heating body and has low cost. The utility model adopts the technical scheme that: the blender comprises a main body made of a diamagnetic material and a cover body, wherein a base is arranged below the main body, the base is provided with a drive device, an output shaft of the drive device is provided with a rotating body, the rotating body is provided with a permanent magnet, the cover body is lovably provided with a pro-magnet body which is driven by the permanent magnet, the main body is provided with a heating element, the output shaft is provided with threads, and the rotating body is movably connected onto the output shaft through the threads.

One more food processing device utilizing magnetic field for rotation of its parts is disclosed in the application WO2018104813A1, published on 2018-06-14. This disclosure relates to a processing device of food products and drinkables, which uses space-varying magnetic field for blade rotation (i.e., it has a magnetic coupling between components in the blender base and in the cover of the blender jar, it works in a principle of an inverted flask, consists of two separate parts, one of which is a removable flask with a built-in second component of the magnetic coupling and the base with an electric motor and a first component of the magnetic coupling). The second magnetic coupling component, which is integrated into the cover, has a disc of electrically conducting metal (aluminum, copper or other material suitable for magnetic coupling may be used), in which Foucault currents can be induced. The disc may be replaced by a holder with two (or more) permanent magnets, which are added to suit to the magnetic coupling requirements.

Functional and aesthetic integration of kitchen devices is another important feature observed in modern kitchens. One type of integration allows simplified maintenance of food processing devices, especially, cleaning of them, while others combine functions of various standalone devices into a new quality to provide more complex and versatile food processing functions in a simpler way. Additionally, one more integration type helps to save space in the kitchen by effectively integrating different kitchen devices into one.

The US patent US9915467B1 discloses an integration of a multi-speed blender into the door of a refrigerator, the patent grant issued in 13.03.2018. A refrigerator with an integrated multi-speed blender including a stand-alone kitchen refrigerator having a recess in a front door thereof and a continuous opening therein. A housing body, on the upper side of the recess, stores components of a motorized blender assembly adjacent to a water dispenser within the recess. The blender assembly includes a mixer shaft operationally communicating with the motor and extending into the recess opening, with blades on a distal end thereof, first and second control switches proximal and operationally controlling the motor, first and second pressure control buttons on a forward side of the housing body, which when pushed along with an activation switch, activate the motor and operate the motor at a first speed and at a faster second speed, respectively. An activation button movable between an initial lower position to a second upper position activates the activation switch in the second upper position.

Another blender, disclosed in US2018266747A1, is integrated into a mobile refrigerator. A portable cooler includes an insulated body that defines a main interior storage space, and a lid structured to at least partially cover the main interior storage space. The lid includes an integrated blender or an integrated blender drive. Components of the blender may include a source of electrical power, an electric motor, and a blender spindle mounted through a surface of the lid and coupled to the electric motor. The integrated blender may also include a blender jar structured to hold food items for blending and one or more blending blades. The lid may further include a blender recess shaped in a negative mold of a collar of the blender jar to prevent the blender jar from rotating during operation.

The inventions mentioned above are relevant to the present invention due to their purposes - to provide a food or beverage processing devices, employ magnetic field to rotate mixing and blending parts and blades for food processing, as well as to integrate different kitchen devices to save kitchen space, simplify device maintenance and cleaning, or provide new qualities to food preparation process.

However, the aforementioned patent applications still do not disclose any solutions to integrate seamlessly the most essential food processing functions into the environment which is the most attended place during the food preparation process - the kitchen worktop in general. The mixer and blender devices used for food processing are standalone and single-function type devices, which often occupy the space on the worktop, require special maintenance and cleaning. Moreover, the power cables and manual controls cause inconveniences during the food preparation on the kitchen worktop. Because none of the prior devices have provided such solutions, it could be regarded as drawbacks of the inventions.

### SUMMARY

In order to eliminate the drawbacks indicated above, this invention provides an integrated and seamless kitchen worktop system (1) comprising at least a rotation base for food and beverage processing devices such as a mixer, a blender, a bottle, etc. The worktop-integrated base of the blending and mixing device has the necessary components to create an alternating magnetic flux, which is used to rotate the blades of the processing device. Additionally, to save the kitchen worktop area, induction heating coil can be located in the area used for conventional induction-based heating and food cooking.

The blending and mixing device comprises a magnetic coupling between an electric motor and a blade or mixing rod arrangement, wherein the first component of the magnetic coupling is associated with an electric motor and the complete part is arranged below a kitchen worktop (counter-top). The first component of the magnetic coupling is situated in the proximity of the top surface of the worktop.

The worktop can be a regular worktop having a surface layer (2) made of common solid surface non-magnetic materials, such as laminates, wood, acrylic, resins, ceramic tiles, natural or engineered stone, etc. In most cases, the first component (9) of the magnetic coupling is arranged in a bottom pocket or the base (3) of the worktop system (1) to ensure minimum distance (72) between the first and a second component of the magnetic coupling.

The worktop (2) can be the top surface of an electric cooktop, such as a heater or induction-based cooktops (hobs). The blending and mixing device can be arranged next to the cooking heaters and controlled via the control interface of the cooktop or via a wireless connection, for example, a smartphone application.

The second component of the magnetic coupling is associated with the main container of a blender or mixer, cookware or any other dishes in which blending or mixing is to be carried out. It can be configured as a magnetic assembly integrated into the bottom part of a blending or mixing dish, or the lid part of the dish. The lid mounting can be embodied in several ways, e. g., the magnetic assembly can protrude downwards from the lid into the mixing volume or be integrated inside the lid and the complete mixing dish is placed lid-down onto the worktop area having the first component of the magnetic coupling integrated beneath the surface of the worktop.

In some embodiments, the second component of the magnetic coupling is associated with blades or mixing rods and simply immersed into the foodstuff to be mixed or blended.

In another embodiment the magnetic coupling and blade assembly can be positioned on a pin protruded from the bottom center of the dish.

Finally, the containers, pots or dishes of a special construction allowing a combined and simultaneous food mixing and heating, when placed on top of the integrated system could be used, (1).

### DESCRIPTION OF DRAWINGS

The drawings are provided herein only for the sake of clarity and should not be referred to as the only possible implementation of the invention and should not limit the scope of the invention by any means.

Exemplary drawings of the food and beverages processing system:
- Fig. 1: is a schematic representation of food and beverage processing system, comprising a general-purpose kitchen worktop with the integrated magnetic coupling bases and induction heating elements. Isometric projection view of the assembled system (a) and the view of the system with the worktop layer opened (b).
- Fig. 2: is a schematic representation of food and beverage processing system, used with different types of kitchen containers, such as blenders and mixers, conventional pots compatible with induction heating, and composite pots having special construction for combined heating and mixing of food to be processed. Cross section view.
- Fig. 3: is a schematic representation of surface recesses in the top and bottom surfaces of the kitchen worktop layer. Cross section view.
- Fig. 4: is a schematic representation of magnetic coupling implementations, for the first component and the second component of the magnetic coupling.
- Fig. 5: is a schematic representation of the system integration constraints.
- Fig. 6: is a schematic representation of a torque multiplier gear, connected to the second component of the magnetic coupling.

### DRAWINGS - Reference Numerals

**1** - an integrated system for food and beverage processing, comprising a flat kitchen worktop, magnetic coupling bases for mixing and blending, and elements for induction heating;
**2** - the kitchen worktop with surfaces areas for magnetic coupling and induction heating;
**3** - the base of the system with the integrated components of magnetic coupling and induction heating;
**4** - worktop surface area for a ring-type induction heater;
**5, 7-** worktop surface area for magnetic coupling;
**6** - worktop surface area for a pancake-type induction heater;
**8** - the ring-type coil for induction heating;
**9, 11** - the first component of the magnetic coupling;
**10** - the pancake-type coil for induction heating;
**21** - the electric motor of the magnetic coupling;
**23** - mixing/blending/crushing container device;
**24** - mixing/blending/crushing blades;
**25** - the second component of the magnetic coupling;
**26** - a pot suitable for induction heating;
**31, 36** - a special construction pot suitable for a combined mixing and heating of the food to be processed;
**32** - a bottom layer of the pot suitable for induction heating;
**33, 37** - the second component of the magnetic coupling;
**34, 38** - the mixing blades within the pot;
**35, 39** - the shaft for mixing blades within the pot;
**40** - internal construction tube within the pot, to support mixing blades, shaft and the second component of the magnetic coupling;
**51** - the top surface recess for fixing the position of the mixing device on the worktop;
**52** - the bottom surface recess intended for the reduction of the gap between the magnetic coupling components;
**53** - the worktop surface embossment for exact positioning and cohesion of the mixing container to the worktop surface;
**61** - a non-magnetic metal disc as the second component of the magnetic coupling;
**62, 64, 66** - retainer with the permanent magnets, as the second component of the magnetic coupling;
**63** - the shaft connecting the electric motor and the second component of the magnetic coupling;
**65** - the shaft to the free-rotating second component of the magnetic coupling;
**67** - the solenoid coil and electromagnet system for the direct-drive type motors;
**68** - the retainer of permanent magnets on the rotor of the first component of the magnetic coupling;
**69** - the retainer of induction heating coils;
**70** - the absolute distance between the first component of the magnetic coupling and the induction heating coil;
**71** - the worktop layer thickness;
**72** - the gap between the components of the magnetic coupling;
**73** - the exact position of the blending container device above the first component of the magnetic coupling;
**74** - the torque multiplier gear for the second component of the magnetic coupling;
**75** - the sensory control area on the surface of the kitchen worktop;
**76** - electromagnets under the worktop, for fixing a food processing device or tool onto the worktop surface;
**77** - permanent magnets on a food processing device or tool for fixing it onto the worktop surface;
**78** - a video-projector arranged for illumination of the worktop and provision of graphical information on the worktop;
**79** - a smart video-camera arranged for video-capturing of worktop surface area and objects on it;
**80** - stator windings as the first component of the magnetic coupling;
**81** - the second component of the magnetic coupling comprising permanent magnets;

### DETAILED DESCRIPTION OF PREFERRED EMBODIMENTS

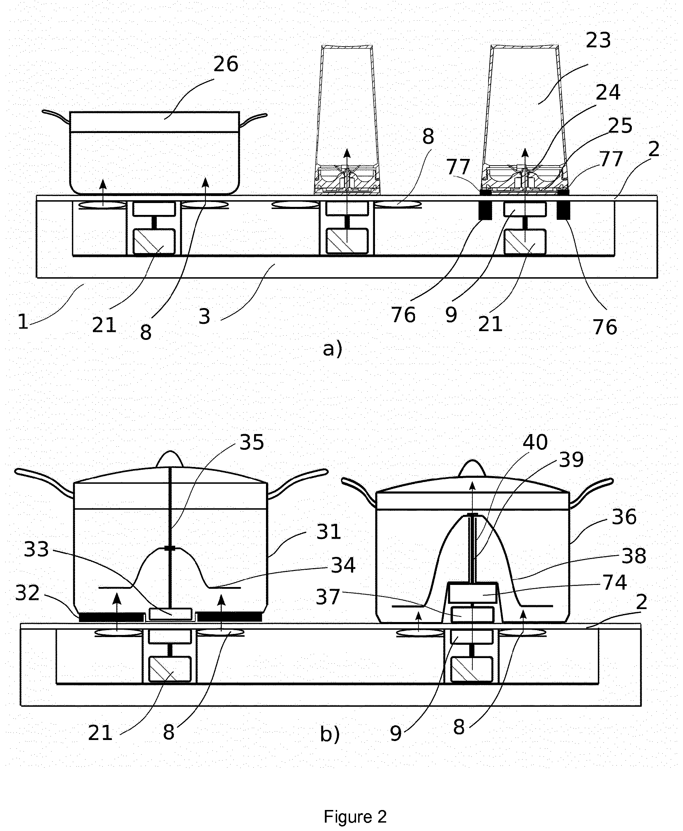

This invention comprises an integrated system (1) for food and beverage processing, which can be used as a mixer, a blender, a bottle, etc. Furthermore, the system (1) can be used for food heating, by using conventional induction pots (26) or dishes. The blending and mixing container devices can be configured to have a heating function. This is useful when preparing smashed soups or other hot and mixed meals. Mixing and heating is possible simultaneously or in a combined manner since Eddie currents, which is the main phenomena related to induction heating, is mainly based on alternating (direction) current in planar induction coils and is proportional to the strength of the magnetic field, the area of the loop, and the rate of change of flux, and inversely proportional to the resistivity of the material. The rotation of mixing blades is carried out using a constantly rotating magnetic field, created by the magnetic coupling, which also contributes to heating of conductors (e. g. the pot material) but to a lower extent than currents of alternating direction in the planar induction coil. In case of conventional metal cooking dishes, mixing will cause some level of heating, depending on bottom thickness and resistivity of the pot material, however, it is possible to minimize this effect by using composite pots of special construction, such as 31 and 36 in Figure 2.

**The system**. This system (1) comprises a general-purpose kitchen worktop (otherwise a cook-top, a counter-top, an induction hob surface) (2), having a seamless surface, and made of common solid surface non-magnetic materials, such as laminates, wood, acrylic, resins, ceramic tiles, glass, natural or engineered stone, etc. The worktop (2) also can be the top surface of an electric cook-top, such as a heater or induction-based cooktops (hobs). For blending and mixing, the magnetic coupling components (9) can be arranged next to cooking heaters (8) and controlled via the control interface of the cook-top or via a wireless connection, i. e. a smartphone application.

The system (1) employs the mixing container device (23, 31, 36) arranged to utilize alternating magnetic flux for the rotation of the mixing blade (24, 34, 38) assembly. This means, there is magnetic coupling between the two separate parts (magnetic coupling components). One of the parts is the base-part being arranged underneath the kitchen worktop layer (2) and comprising a source of alternating magnetic flux, such as an electric motor (21) which is connected to the first component (9) of the magnetic coupling connected through the shaft (67). Another part is comprised by the mixing container device (23, 31, 36) and this part comprises, at least, the second component of the magnetic coupling, integrated into rigid connection with a mixing blade (24, 34, 38) assembly.

The base-part with the electric motor (21) is located under the worktop surface (2) as the first component of the magnetic coupling (9), and the food blending container device (23, 31, 36) is implemented as the second component of the magnetic coupling (25, 33, 37). The food blending container device (23, 31, 36) is changeable and can provide a variety of different options such as a device of a mixer, a blender, a bottle, a mixing pot and so on.

The food blending container device (23, 31, 36) and the kitchen worktop (2) are not bounded together by any physical fixation (mechanical coupling) mechanism (retainers, etc.). Nonetheless, the kitchen worktop (2) comprises an utterly flat surface, which simplifies the use and daily maintenance of the device.

Another application is the usage of the worktop (2) surface areas (4, 6) as the conventional induction hob. In this application, the heating coils (8, 10) are used to heat the bottom base of a conventional steel pot (26) being suitable for cooking food on any induction hobs.

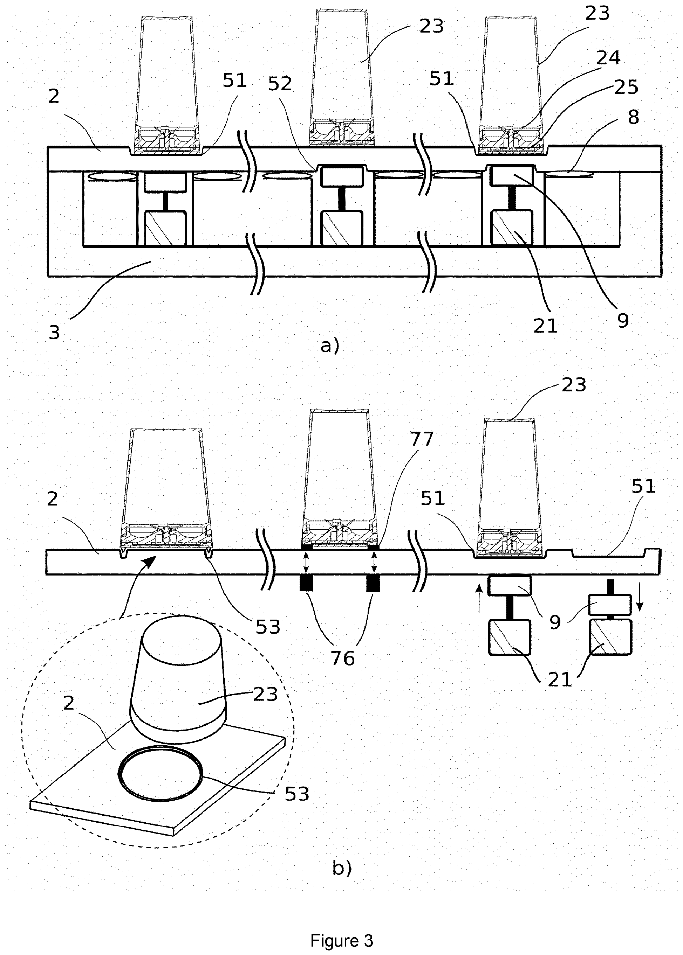

The third type of potential applications of the system is a combined mixing and heating of the food to be processed. A special construction pot or pots (31, 36) must be used in this application, having their mixing blades (34, 38) driven by the magnetic coupling (33, 37, 9), and the pot base (32) being able to heat the food due to heating by the induction coils (8, 10). The combined magnetic coupling and induction heating meet some obstacles because the conventional induction heaters require the pot base to be made of electrically conductive material, such as steel, iron, etc. This also means that the pot material will absorb some of the energy of the magnetic coupling and instead of using the energy for rotation of mixer blades, it will use some of it for heating of the pot material. On the other hand, the aluminum or copper base which is magnetically transmissive and would work for the magnetic coupling, however, is typically not suitable for induction heating due to high frequencies required. Therefore, the two construction examples of the combined heating and mixing pots are provided in Figure 3 b.

**Types of cooking and blending devices to be used with the system**. The blender container (23, 31, 36) device can be any type of processing device having magnetic coupling to rotate the food processing blades.

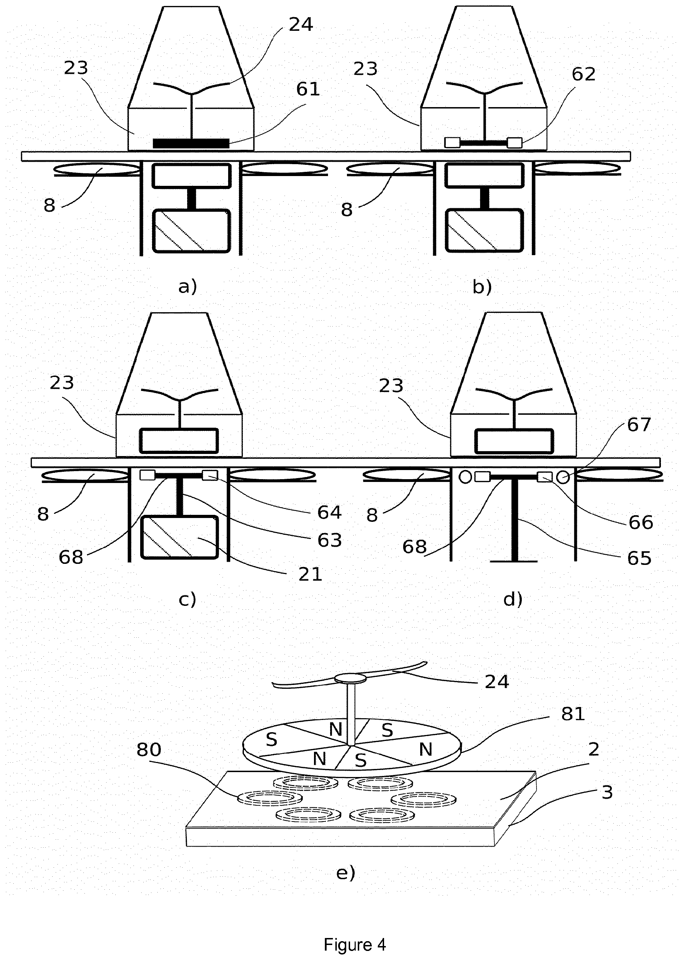

As an example, this invention relates to the blender and mixer device disclosed in the patent application WO2018104813A1 "Food and beverage processing device comprising a magnetic coupling". A device described by WO2018104813A1 comprises two main separate parts: the base, which houses an electric motor and one magnetic coupling component, and a removable glass or plastic container, composed of a lid and a bottle. The container is situated on the base with the lid facing down, where the lid houses tightly packed second component of the magnetic coupling, which is stiffly connected with the blades or the shoulders. Consequently, by using this device with the system of the present invention, the dedicated base is not required, only the mixing container (23) with the lid having integrated second component of magnetic coupling (25) can be used on the kitchen worktop (2), wherein the magnetic coupling base with the motor and control is integrated under the worktop surface. Construction of the second component of the magnetic coupling can have various configurations, forms and be made of various materials, which are suitable for the production of such constructions, from the most basic metal disc to complex arrangements of multiple magnets. Several example embodiments of magnetic coupling components are presented in Figure 4.

Another type of food processing device to be used with the integrated system (1) is a conventional pot (26), also used with any induction cooktops (hobs). The pot can be used to cook the food on the cooktop area (6) having the pancake-type induction coil (10) such as in the most induction hobs. Also, the pot (26) can be positioned onto the worktop (2) area (4) wherein the ring-type induction coil (8) is implemented under the worktop surface (2). In this case, not the entire base of the pot (26) but a sufficient part of it would be heated by the inductive ring-shaped coil (8). There are no limitations in the system (1) to use it with any pots or dishes which are suitable for induction cooktops.

The third type of food processing devices used with the system is a special pot having functions of food cooking and mixing simultaneously or in a combined manner. Two examples of such pots are presented in Figure 2 b. One mixing and heating pot (31) has a construction similar to that of prior art application CN201987367 "Blender". However, a special modification is necessary, in order to use this construction pot with the invented system for mixing and heating. As disclosed by CN201987367, the pot is made of non-magnetic (diamagnetic or paramagnetic) material, for example, copper or aluminum. However, a thin copper base, being diamagnetic and "transparent" to the magnetic coupling, still is not suitable for induction heating. The solution is: the pot modification comprising an additional ring-shaped layer (32) of ferromagnetic metal below the pot base, and this layer would be situated above the ring-shaped induction area (4) of the worktop (2). The thickness of the said ferromagnetic layer (32) is such that the heating induction from the ring-shaped coil (8) heats the ferromagnetic layer (32) of the pot (31) but does not reach the copper base above. Usually, the sufficient thickness of the ferromagnetic layer (32) is in the range of several millimeters. Meanwhile, the central circular area of the pot (31) is a downside recess, used to place the second component (33) of the magnetic coupling in the recess. Therefore, the food mixing functionality is provided by means of the magnetic coupling (33, 21, 9), the mixing shaft (35) and the mixing blades (34).

Another combined mixing and heating pot (36) has a different construction and is made entirely of the ferromagnetic metal. Therefore, it is suitable for induction heating. The central area of the pot base, above the magnetic coupling worktop area (5), has an upside recess with the second component (37) of the magnetic coupling and also the rotation torque multiplier gear (74) positioned in said recess. The recess further is prolonged upwards and narrows to a tube (40) by enclosing the mixing shaft (39) inside of the tube, wherein the mixing blades (38) are mounted on the top of the protruding shaft (39). The blades (38) can be easily changeable (mountable) and have different configurations. The tube (40) with the shaft (39) is arranged so that the second component (37) of the magnetic coupling is positioned at the appropriate proximity from the worktop surface (2) and is coupled with the first component (9), for the mutual rotation.

Furthermore, different food processing devices and tools can be used with the worktop-integrated system: the blender or mixer container device having the second component of the magnetic coupling can be one or a set of food processing devices:
- Blender for smoothies, soups, ice, cocktails, milkshakes, sauces;
- Milk frother;
- Slow juicer;
- Centrifugal juicer;
- Hand citrus juicer;
- Grinder for coffee and sugar;
- Spice grinder;
- Grains miller for grain, nuts, rice;
- Mixer for dough;
- Whipper for egg whites and yolks, custards, mayonnaise;
- Mincer for vegetables and meat;
- Chopper for vegetables and fruits;
- Grater for hard cheeses;
- Sausage maker of meat and vegetables;
- Strainer for vegetables and fruits;
- Slicer/Shredder for vegetables and fruits;
- Pasta roller and cutter for various pastas;
- Blender and cooker for soups and sauces, with heating by induction;
- Mixer and cooker for soups and porridges, with heating by induction.

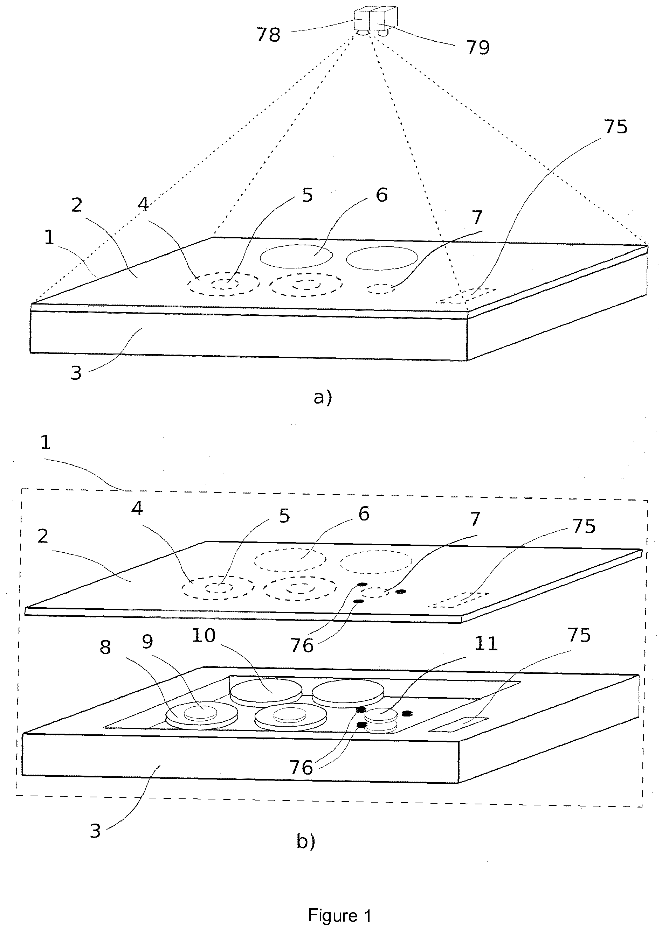

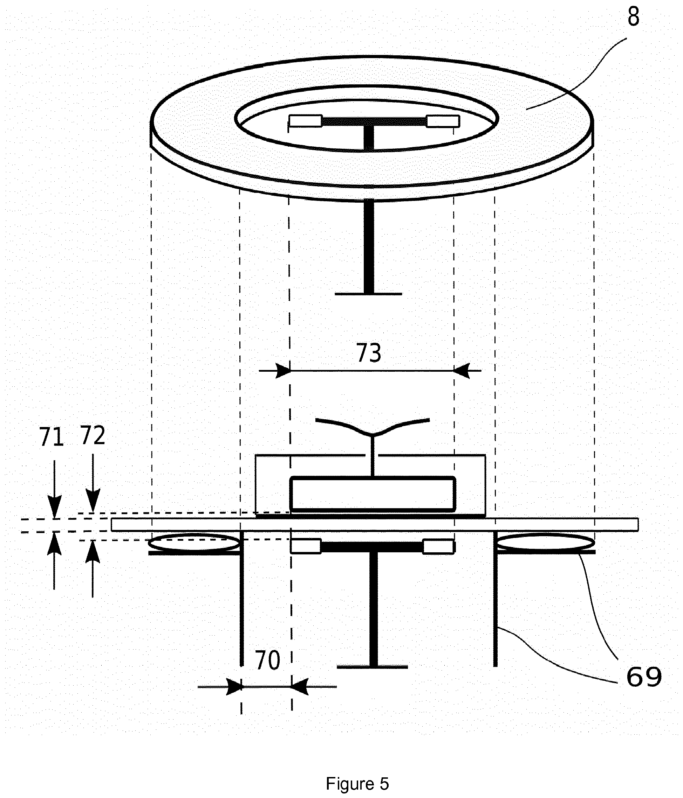

**Preferred embodiment.** In the most preferred embodiment, the integrated system (1) comprises a kitchen worktop (2) of any large size and with the integrated, at least, one magnetic coupling component (9) being combined together with the ring-shaped induction heating coil (8) in the same area of the worktop (4, 5) (Figure 1). The important constraints and features for integrating these components into the system are (Figure 5):
- The worktop (2) layer material and thickness (71);
- The gap (72) between the components of magnetic coupling needed to provide a sufficient torque (at least, 1 Nm);
- Minimal distance (70) between the induction heater coil (8) and the first component of the magnetic coupling (9).
- Exact position (73) of the blending, mixing and cooking container devices (23, 31, 36) for the combined and simultaneous heating and mixing of the food;
- Sufficient fixing of the blending container device (23) on the worktop (2) surface, especially, if the worktop (2) surface is slippery (Figure 3).

In the most preferred embodiment, the gap (72) of between the magnetic coupling components (9) and (25, 33, 37) can be defined by the system (1) design, and on the worktop (2) side this gap is influenced by the thickness of the worktop (2) and by the air gap between the worktop layer (2) and the first component of the magnetic coupling (9). The worktop (2) thickness in the area of the magnetic coupling (5, 7) can be arbitrarily reduced, by introducing the top-surface recess (51) and the bottom-surface recess (52). The whole gap between the first magnetic coupling component (9) and the second magnetic coupling component (25, 33, 37) may vary within the most preferred range of 6-7 millimeters, although it is not limited only to this range if the intended torque is achieved with some different gap distances.

The top-surface recess (51) also makes use for the exact positioning and better fixing of the mixing/blending container device (23) onto the worktop (2) surface, exactly to the magnetic coupling area (5), as it is depicted in Figure 3a. Both the recess (51) and recess (52) in this invention are meant to be the worktop surface recess, primarily, to reduce worktop layer thickness (Figure 3a), and it is not the worktop layer recess which would mean the worktop (2) layer to be a non-flat.

The absolute distance between any point of the induction heater coil (8) and the first and second components (9), (25, 33, 37), contrarily, should be enough large, in order for the coil (8) and magnetic coupling component (9) not to influence each other. As the magnetic field drops rapidly with distance from the coil (8) surface, the absolute distance must be reasonably higher than the desired gap distance between the components of the magnetic coupling.

If the worktop (2) upper surface is flat and has no recess (51) in the magnetic coupling area, it may be useful to apply some worktop top-surface embossment (53) (Figure 3b), in order to position the blending container device (23) or other food processing tool exactly above the magnetic coupling (5, 7) and further to prevent the blending container device (23) to slip away from the area of the magnetic coupling (5, 7). The shape of top-surface embossment (53) can be selected of various shapes, for example, ring-recess, or any other with no limitations.

The invention allows using many different devices and tools employing rotational movement of the magnetic coupling and different level of torque for processing of different kinds of food. Some food processing containers, such as larger pots with heating and mixing features are weighty, moreover, the food in the pot comprises additional weight which helps to keep the pot onto the worktop surface without using additional fixing means. However, some smaller kitchen tools, for example, a coffee or spice grinder, are less weighty and some additional fixing of the tool to the worktop surface may be necessary in order for the tool to withstand rotation of the magnetic coupling. The clutch of the magnetic coupling components also creates an attraction force which sticks the bottom of the tool to the worktop surface. Furthermore, additional electromagnet attractors (76) and permanent magnets (77) can be arranged under the worktop layer, in order to fix steadily less weighty kitchen tools or tools having its center of mass outside of its bottom contact surface area to the worktop surface during the food processing (Figure 3b).

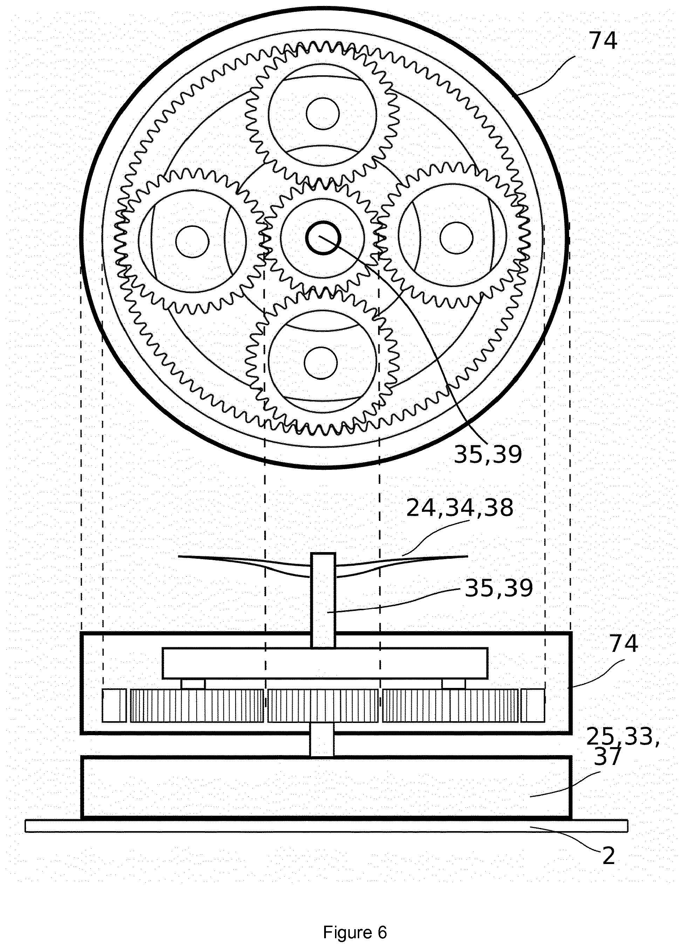

**Torque multiplier**. The invention employs a variety of food processing devices and tools using the rotation provided by magnetic coupling and being compatible with the magnetic coupling. The rotation provided to various tools may be different by the angular speed, force and torque. For example, a milk frother requires a fast rotation speed and lower force, meanwhile, a smashed soup mixer-cooker (36) requires rotation with lower angular speed and higher mixing force. Therefore, a common component in the present invention is the rotation torque multiplier gear (74) integrated between the second component (25, 33, 37) of the magnetic coupling and the rotating blades (24, 34, 38) of the mixing and blending container. The rotation torque multiplier gear (74) can be implemented as a planetary gear, also known as epicyclic train gear as depicted in Figure 6, or any other type of rotation torque multiplier gear.

**Configurations of the magnetic coupling,** **Figure 4**. In the most preferred embodiment, one of the two parts of the magnetic coupling is the base-part integrated into of the food processing system (1) under the worktop layer (2). Another one is the blending device part integrated into the mixing, blending, crushing or cooking device (23, 31, 36) which is placed on the worktop (2) surface, exactly above the base-part.

In the most preferred embodiment, the magnetic coupling base-part, embedded into the integrated kitchen worktop system (1), comprises an electric motor (21), the magnet retainer (68), permanent magnets (64), and the shaft (63) connecting the motor (21) and the magnet retainer (68), for their common rotation (Figure 4c). The electric motor (21), embedded under the integrated kitchen worktop layer (2) and onto the system's base (3), is a brushless hub motor, which is composed of electromagnetic coils in its stator and permanent magnets in the rotor. The first component (9, 33, 37) of the magnetic coupling, which comprises the retainer (68) of the magnets, and the permanent magnets (64), arranged inside the retainer (68), is mounted onto the systems mounting base (3). The aforementioned retainer (68) is made in such manner that it could house circularly arranged magnets (64) which compose the core of the first component (9) of the magnetic coupling. Once an electric current starts the motor (21) to rotate together with the first component of the magnetic coupling (9, 66 and 68), the motor starts to rotate around the shaft (63), thus inducing rotation of the second component (25, 33, 37) of the magnetic coupling, together with the blade (24, 34, 38) assembly, housed inside of the blending container devices (23, 31, 36).

Additionally, the first component (9, 66, 68) of the magnetic coupling can be permanently arranged at the proximity to the worktop layer (2), or it can be movable between the lower position and the upper position, for example, by means of motor actuator or a helical jackscrew as in patent application CN201987367. It means, if the magnetic coupling (5, 7) is used for the torque, then the first component (9, 66, 68) is raised up to the proximity of the worktop (2), and vice versa, if the torque is not used then the first component of the magnetic coupling (9, 66, 68) is landed down to the lower (or non-operating) position (Figure 3b).

In another embodiment, depicted in Figure 4d, the coils (67) of the stator or solenoids of electromagnets are arranged around the rotor which itself comprises retainer (68) and permanent magnets (66), arranged in such manner that the alternating magnetic flux, generated by the electromagnets of the stator, rotates the rotor together with the permanent magnets (66), mounted onto the shaft (65). In this embodiment, the rotor itself composes the first component (9) of the magnetic coupling. In this case, it is useful that the worktop layer (2), which is embedded atop the first component (9), a rotor (66), and onto which the blending container device is being stationed atop, is made from a non-magnetic (diamagnetic) material. Similarly, the horizontal surface of the blending container's (23) base should also be made from thin diamagnetic material. Such approach enables to obtain a thin gap between the components (9 and 25) of the magnetic coupling and ensure an effective interaction as well as low energetic losses.

Nonetheless, in another embodiment depicted in Figure 4e, the base (3) comprises flat windings which are adapted to operate as the stator (80) of an electric brushless motor and, as the first component (9) of the magnetic coupling and the second component of the magnetic coupling (81), it comprises a set of permanent magnets and is adapted to work as the rotor of the brushless motor.

In the most preferred embodiment, the second component of the magnetic coupling comprises a non-magnetic metal disc (25) which is arranged to rotate upon the induced Foucault currents and, therefore, magnetism from the rotating first component (9) of the magnetic coupling, as depicted in Figure 4a.

Another embodiment of the second component of the magnetic coupling, as depicted in Figure 4b, may comprise a holder with two (or more) permanent magnets (62), which are added to suit to the magnetic coupling requirements.

There are many constructional variations of stators, rotors, and methods how to arrange permanent magnets or electromagnetic coil windings inside the worktop system (1). Moreover, instead of windings, it is possible to use other electronic elements in order to connect the rotor to the first component (9) of the magnetic coupling, or for it to act as a component of the magnetic coupling itself. Based on this invention, a person skilled in the art could easily select a suitable construction, that is why the aforementioned constructional variations should not limit the scope of the invention, as long as electronic elements and variations of how to arrange them are used in the food processing system (1), which employs a magnetic coupling for rotation of the blade (24) assembly, and is composed of two separate parts, where one is a blending container device (23, 31, 36), and another is the integrated worktop system (1), which houses an electric motor or at least a part of it.

**System controls**. The invention can be implemented in such a manner, that all of the controls could be made throughout the use of a smart control device via WiFi, Bluetooth,other protocol or other types of interface. In this case, the construction of the blender simplifies drastically - the necessity of buttons, indicators, speed regulators, etc. is suspended. Blending speed, heating function or even a certainly alternating mode could be controlled by the aforementioned portable device. This device could also save and provide recipes for cocktails, as well as a processing mode for each cocktail. For instance, if a certain cocktail contains bananas as an ingredient, a processing mode could be set up in such manner, that the inverts of the blades could be cyclically variated, in order to process the banana most effectively.

Furthermore, the control of combined heating and mixing (for example, with the use of special construction pots 31 and 36) can be controlled by said control means, according to different dishes and food recipes and their steps of preparation.

Furthermore, the system controls can be implemented as a sensory touch-pad (75) on the worktop surface as presented in Figure 1.

Furthermore, the system controls comprise means of speech recognition and system control by voice.

Furthermore, the system controls employ the illumination and control functions of the kitchen worktop by a video-projector (78) and a machine vision video-camera (79), for example, both installed above the kitchen worktop (1) as in Figure 1. The video-projector (78) is arranged to provide, at least, the general illumination onto the worktop surface (2). Additionally, the video-projector (78) provides the projection of graphical still and moving images onto the worktop surface (2), with the useful graphical information for cooking or during the food preparation process. Additionally, the system controls comprise a smart video-camera (79) having the feature of object (at least, devices and tools) recognition on the worktop (2). The recognition feature allows adjusting the video-projector image precisely onto the worktop. Furthermore, the camera (79) recognizes the objects lying on the worktop (2) and further, with the help of video-projector (78) and voice synthesis, the control system makes graphical and voice hints to the cook, during the food preparation process. For example, the video camera (79) may recognize a spice grinder and with the help of video projector (78), to show to the cook the exact magnetic coupling area (5, 7) on the worktop, for placing the spice grinder exactly onto that area.

Yet in another embodiment, the signage is carried out as LED indicators integrated into the worktop (2).

## Claims

1. A food and beverage processing system (1), utilizing alternating magnetic flux and a magnetic coupling for rotation of a blade or shoulder assembly, comprising, at least:
a base (3) comprising the first component of the magnetic coupling (9),
a container device (23), comprising an assembly of blades or shoulders (24, 34, 38), which is connected with the second component of the magnetic coupling (25, 33, 37),
**characterized in that** the base is integrated into a kitchen worktop (2) under its upper surface and intensity of the magnetic field and a gap distance (72) between the two components of the magnetic coupling is predetermined, such that a torque of at least 1 Newton-meter (Nm) is created to the blades or shoulders (24, 34, 38) for food processing in the container device (23, 31, 36).

2. The food and beverage processing system according to Claim 1, **characterized in that** the general-purpose kitchen worktop (2) is a kitchen worktop or cook-top or counter-top or induction hob surface, and is made of solid surface non-magnetic materials.

3. The food and beverage processing system according to Claim 1, **characterized in that** the blending, crushing or mixing container device (23, 31, 36) comprises an assembly of blades or shoulders (24, 34, 38) wherein said assembly of blades or shoulders is connected with the second component of the magnetic coupling (25, 33, 37) through a torque multiplier (74) arranged to transform the angular speed and force of rotation.

4. The food and beverage processing system according to one of Claims 1 to 3, **characterized in that** the system (1) further comprises an inductive heating element (8) under the kitchen worktop (2), arranged to heat the food being processed in said container device (31, 36).

5. The food and beverage processing system according to Claim 1, **characterized in that** the worktop-integrated part of the magnetic coupling houses an electric motor (21) and the first component (9) of the magnetic coupling having permanent magnets (64) wherein the motor (21) and the first component (9) are connected through a mutual shaft (63).

6. The food and beverage processing system according to Claim 1, **characterized in that** the magnets (66) of the electric motor are adapted to operate as the rotor (66, 68) of the motor and as the first component (9) of the magnetic coupling.

7. The food and beverage processing system according to Claim 1, **characterized in that** the base (3) comprises windings (80) which are adapted to operate as the stator of an electric brushless motor and as the first component (9) of the magnetic coupling and the second component of the magnetic coupling (81) comprises permanent magnets and is adapted to work as the rotor of the brushless motor.

8. The food and beverage processing system according to one of Claims 1 to 7, **characterized in that** said kitchen worktop (2) comprises a top-surface recess (51) above the first component (9) of the magnetic coupling, said recess adapted to fit the blending container (23) in such manner, that the second component (25) of the magnetic coupling is situated on the area of alternating magnetic flux, generated by the electromagnets of the stator; and the component of the magnetic coupling, housed inside the container device (23) is adapted to operate as a rotor of the electric motor.

9. The food and beverage processing system according to one of Claims 1 to 8, **characterized in that** said kitchen worktop comprises a top-surface embossment (53) above the first component of the magnetic coupling, said top-surface embossment is adapted to place the container in such manner, that the second component of the magnetic coupling is situated and centered within the area of alternating magnetic flux, generated by the rotating magnets of the first component of the magnetic coupling.

10. The food and beverage processing system according to one of Claims 1 to 9, **characterized in that** said kitchen worktop comprises a bottom-surface recess (52) for the first component of the magnetic coupling, said bottom-surface recess being arranged for the gap distance (72) between magnetic coupling components, to create at least the sufficient torque.

11. The food and beverage processing system according to one of Claims 1 to 10, **characterized in that**, at least, the speed of the electric motor (21) of the magnetic coupling and operation of the inductive heating element (8) are controlled by a portable electronic device, which is adapted to communicate via wireless communication components, embedded inside the base (3) of the system, wherein at least information about the speed of the motor is transferred via a wireless connection.

12. The food and beverage processing system according to one of Claims 1 to 10, **characterized in that** the system controls comprises means of speech recognition and system control by a voice.

13. The food and beverage processing system according to one of Claims 1 to 10, **characterized in that** the system controls comprises a video-projector (78) arranged for illumination of the worktop area and graphical information provision onto the worktop (2), and a smart video-camera (79) arranged for video-capturing of the worktop surface area and objects on it.

14. The food and beverage processing system according to Claim 1, **characterized in that** the blending container device comprises a second component (25, 33, 37) of the magnetic coupling for food blending, crushing or mixing.

15. The food and beverage processing system according to Claim 14, **characterized in that** the second component of the magnetic coupling (25, 33, 37), comprises an electrically conductive metal disc-shaped member (61), in which Foucault currents can be induced.

16. The food and beverage processing system according to Claim 14, **characterized in that** the second component of the magnetic coupling further comprises a system of at least two permanent magnets (62), where the aforementioned permanent magnets are arranged in a manner, pertaining the magnetic coupling.

17. The food and beverage processing system according to Claim 1, **characterized in that** the base area of the container device (31) is at least partially made of a ferromagnetic material (32) for inductive heating.

18. The food and beverage processing system according to Claim 1, **characterized in that** the container device (31, 36) comprises the second component of the magnetic coupling (33, 37) for food mixing and blending, and the ferromagnetic metal base (32, 36) for inductive heating.

19. The food and beverage processing system according to Claim 1, **characterized in that** the container device having the second component of the magnetic coupling is one or a set of food processing devices, such as:
• Blender for smoothies, soups, ice, cocktails, milkshakes, sauces;
• Slow juicer;
• Centrifugal juicer;
• Hand citrus juicer;
• Grinder for coffee and sugar;
• Spice grinder;
• Grains miller for grain, nuts, rice;
• Mixer for dough;
• Whipper for egg whites and yolks, custards, mayonnaise;
• Mincer for vegetables and meat;
• Chopper for vegetables and fruits;
• Grater for hard cheeses;
• Sausage maker of meat and vegetables;
• Strainer for vegetables and fruits;
• Slicer/Shredder for vegetables and fruits;
• Pasta roller and cutter for various pastas;
• Blender and cooker for soups and sauces, with heating by induction;
• Mixer and cooker for soups and porridges, with heating by induction.
